# EUROPÄISCHE PATENTANMELDUNG

(11) **EP 3 097 993 A1**
(43) Veröffentlichungstag der Anmeldung: **30.11.2016**
(21) Anmeldenummer: 16001103.7
(22) Anmeldetag: 13.05.2016
(51) Int. Cl.: B21D 41/02, B29C 57/04

(54) **AUFWEITWERKZEUG FÜR INSTALLATIONSROHRE**

(30) Priorität: 26.05.2015 DE 102015209634
(71) Anmelder: Maryvonne Management & Consulting AG, 6300 Zug (CH)
(72) Erfinder: Reckzeh, Thomas, 44803 Bochum (DE)
(74) Vertreter: Schalch, Rainer

(57) **Zusammenfassung**

Bei einem Aufweitwerkzeug (1) für Rohrenden ist ein Aufweitelement (5) mit einem Aufweitkörper (6) vorgesehen. Das Aufweitelement (5) ist an einem Betätigungselement (2) befestigbar. Das Aufweitelement hat ein eigenes Gehäuse mit einer Rückwand, die zusammen mit dem vorderen Gehäuseteil einen definierten Raum für die Lagerung der Spreizteile (10) des Aufweitkörpers schafft. Damit kann eine sehr genaue Führung der Spreizteile erzielt werden, welche das Aufweitwerkzeug auch für Mehrschichtverbundrohre geeignet macht.

## Beschreibung

### Hintergrund der Erfindung

Die Erfindung betrifft ein Aufweitwerkzeug zum Aufweiten des Endes eines Rohres, mit einem Betätigungselement, umfassend einen längsverschieblich geführten Spreizdorn und eine Betätigungsanordnung für die Verschiebung des Spreizdorns, und mit einem Aufweitelement, umfassend einen durch den Spreizdorn aufweitbaren Aufweitkörper, der mehrere segmentartig angeordnete Spreizteile mit jeweils einem Spreizteilzapfen und einem Spreizteilkragen umfasst.

### Stand der Technik

Aus dem Bereich der Rohrverpressungen für Kunststoffrohre (Monorohre) ist es bekannt, diese vor dem Verpressen mittels Aufweitwerkzeugen (Expanderzangen und Expansionköpfe) aufzuweiten und im aufgeweiteten Zustand, welchen die Kunststoffrohre aufgrund des Memory-Effektes eine gewisse Zeit beibehalten, auf eine Stützhülse zu schieben, wodurch die Querschnittverengung durch die Wanddicke der Stützhülsen mehr oder weniger kompensiert werden kann.

Der Einsatz entsprechender Aufweitwerkzeuge für Mehrschichtverbundrohre, die zusätzlich auch eine Metallschicht umfassen, hat sich jedoch als weitgehend ungeeignet erwiesen. Die einzelnen Teile des Aufweitkörpers herkömmlicher Aufweitwerkzeuge verteilen die Aufweitkraft nicht gleichmässig über den Umfang, wodurch insbesondere an der Innenseite des Rohres Inhomogenitäten entstehen. Bei Kunststoffrohren stellt dies auf Grund von deren Elastizität kein Problem dar. Bei Mehrschichtverbundrohren hat sich jedoch gezeigt, dass die ungleichmässige Krafteverteilung schon bei geringen Aufweitmassen zu Rissen in der Metallschicht des Verbundrohres und damit zur Unbrauchbarkeit des Rohrendes führt. Dieses Problem kann auch bei dünnwandigen Metallrohren auftreten.

In EP-A-1 674 241 wird zur Behebung dieses Nachteils eine Glättungshülse vorgeschlagen, welche zwischen den Aufweitkörper des Aufweitwerkzeuges und der Innenseite des Rohres angeordnet wird. Damit kann eine ungleichmässige Verformung durch die einzelnen Aufweitsegmente vermindert werden, ein Reissen der Metallschicht ist aber weiterhin möglich. Aus EP-A-2 153 957 ist ein Aufweitwerkzeug bekannt, das eine Begrenzungshülse aufweist. Damit kann eine Beschädigung von Mehrschichtverbundrohren besser vermieden werden. Auch bei diesem Aufweitwerkzeug kann aber der mehrteilige Aufweitkörper zu einer inhomogenen Aufweitung und allenfalls zu Schichtrissen im aufgeweiteten Ende des Rohrs führen. DE 197 30 054 C1 schlägt vor, die Aufweitsegmente durch radiale Stifte zu führen. EP-A 2 682 253 schlägt ein mehrstufiges Aufweiten von Mehrschichtverbundrohren vor.

### Darstellung der Erfindung

Der Erfindung liegt die Aufgabe zu Grunde, ein verbessertes Aufweitwerkzeug zu schaffen, welches insbesondere für Mehrschichtverbundrohre und für dünnwandige Metallrohre gut geeignet ist. Besonders soll damit eine gleichmässigere Aufweitung möglich sein.

Die Aufgabe wird bei einem Aufweitwerkzeug der eingangs genannten Art dadurch gelöst, dass das Aufweitelement ein Gehäuse aufweist, welches vorderseitig in der Art eines Flansches mit einem die Spreizteile beabstandet umgebenden Rohrstutzen und mit einem Kragen ausgebildet ist, an welchen Kragen sich ein hohlzylindrischer Gehäuseteil anschliesst, der zusammen mit dem Kragen einen Aufnahmeraum für die Spreizteilkragen bildet, welcher Aufnahmeraum durch eine Rückwand des Gehäuses abgeschlossen ist, welche Rückwand eine zentrale Ausnehmung für den Spreizdorn aufweist, und dass das Gehäuse und das Betätigungselement zusammenwirkende Befestigungselemente zur lösbaren Befestigung des Aufweitelements am Betätigungselement aufweist.

Dadurch, dass die Spreizteile des Aufweitkörpers mit ihren Spreizteilkragen in einem nur vom Gehäuse des Aufweitelements selber definierten Aufnahmeraum angeordnet sind und ihre Lage somit nicht vom Betätigungselement abhängig ist, können die Spreizteilkragen ganz eng bzw. mit sehr geringem Spiel im Aufnahmeraum gehalten werden. Dies verhindert ein Verkanten der Kragen und die damit einhergehende entsprechend unterschiedliche Expansion des Aufweitkörpers im aufzuweitenden Rohr. Die bean-spruchte Lösung ist konstruktiv und herstellungstechnisch leicht umsetzbar und somit kostengünstig.

Die gute Führung der Spreizteile erlaubt es insbesondere auch, die Spreizteile aus Kunststoff zu bilden, was deren kostengünstige Herstellung erlaubt. Und damit ist auch das Aufweitwerkzeug kostengünstig herstellbar.

Bevorzugt ist, dass das Gehäuse durch eine lösbare und wieder befestigbare Rückwand des Gehäuses abgeschlossen ist, was die einfache Auswechslung des Aufweitkörpers ermöglicht.

Bevorzugt sind die Befestigungselemente zwischen Betätigungselement und Aufweitelement von zusammenwirkenden Schraubgewinden gebildet, bevorzugt von einem Innengewinde in einer Ausnehmung des Betätigungselements und einem Aussengewinde am Gehäuse des Aufweitelements. Die Verwendung solcher Befestigungselemente ergibt eine genau definierte Lage von Betätigungselement und Aufweitelement zueinander. Dies ist besonders vorteilhaft, wenn die Spreizteile bevorzugt Innenflächen aufweisen, die im nicht aufgespreizten Zustand des Aufweitkörpers zusammen einen Innenkonus ausbilden und der Spreizdorn einen Aussenkonus aufweist und das Betätigungselement und das Aufweitelement derart ausgebildet sind, dass bei am Betätigungselement befestigten Aufweitelement der Innenkonus des Aufweitkörpers im Wesentlichen vollflächig am Aussenkonus des Spreizdorns anliegt. Dadurch wird ein Verkanten oder Kippen der Spreizkörper des Aufweitelements ebenfalls vermieden bzw. es wird sichergestellt, dass der Spreizdorn bereits von Beginn der Expansionsbewegung an gleichmässig auf die einzelnen Spreizkörper wirkt.

Eine zusätzliche Sicherung gegen ein Verkanten kann dadurch geschaffen werden, dass die Rückwand des Gehäuses und die Spreizteilkragen mit jeweils zusammenwirkenden Radialführungselementen versehen sind. Dies kann dadurch erfolgen, dass an den Spreizteilkragen Ausformungen vorgesehen sind, welche in Ausnehmungen der Rückwand eingreifen. Dies ergibt einen einfachen Aufbau und eine einfache Zerlegbarkeit des Aufweitelements bzw. Montierbarkeit der Spreizteilkörper.

Bevorzugt ist weiter, dass der Rohrstutzen des Gehäuses einen Innendurchmesser aufweist, welcher der Nenn-Aufweitung des Rohrs durch das Aufweitwerkzeug entspricht. Diese Massnahme schützt das aufzuweitende Rohr im Aufweitbereich und bewirkt insbesondere eine Glättung des Rohrs im Aufweitbereich.

Vorzugsweise wird der Aufweitkörper nur aus zwei oder drei oder maximal vier Spreizteilen gebildet, welche im unaufgespreizten Zustand mit den Spreizteilzapfen eine im Wesentlichen kreisförmige Umfangsform des Aufweitkörpers ausbilden. Auch diese Massnahme fördert ein gleichmässiges Aufweiten.

Die Spreizteile können jeweils angrenzend an die Spreizteilkragen eine Hubbegrenzung durch mindestens eine Ausformung aufweisen, um eine zu grosse Krafteinwirkung auf das aufzuweitende Rohr sicher zu verhindern. Diese Hubbegrenzung kann zum Beispiel als ein umlaufender Kragen ausgestaltet sein oder aus einzelnen Elementen gebildet sein. Es ist weiter bevorzugt, dass die Spreizteile auf den Spreizteilbolzen jeweils benachbart zu den Spreizteilkragen oder ggf. benachbart zu der Hubbegrenzung eine Rändelung oder Fixierungsausformungen aufweisen. Es hat sich gezeigt, dass dadurch ein gutes bzw. gleichmässiges "Mitnehmen" des aufzuweitenden Rohrs durch die Spreizteile bewirkt wird, was ebenfalls Schäden im Rohr bei der Aufweitung vermeiden kann. Die durch die Mitnehmer bzw. die Rändelung oder Fixierungsausformungen ganz vorne am offenen Ende des Rohrs erzeugten Einformungen in der Innenschicht des Rohrs sind nicht störend bei der weiteren Verwendung des Rohrs.

Falls die Rückwand des Gehäuses lösbar angeordnet ist, was eine Demontage der Spreizteile ermöglicht, so kann dies durch eine Schraubverbindung, durch eine Bajonettverbindung oder mittels einer magnetisch wirkenden Verbindung befestigbar und wieder lösbar am hohlzylindrischen Gehäuseteil ausgeführt werden oder durch andere dem Fachmann bekannte Befestigungsmittel, die ein Befestigen / Lösen der Rückwand ermöglichen. Falls die Rückwand unlösbar befestigt ist, also bei der Herstellung des Aufweitelements dauerhaft am vorderen Gehäuseteil befestigt wird, stehen weitere dem Fachmann bekannte Befestigungsmöglichkeiten zur Verfügung, insbesondere auch eine Klebverbindung.

Bevorzugt ist das Aufweitwerkzeug ein händisch bzw. mit Handkraft betätigbares Werkzeug, so dass die Betätigungsanordnung eine zur manuellen Verschiebung des Spreizdorns betätigbare Anordnung ist. Eine Ausbildung als motorisch betätigbares Werkzeug ist ebenfalls möglich, zum Beispiel mit einem elektromotorischen Spindelantrieb zur Verschiebung des Spreizdorns.

### Kurze Beschreibung der Zeichnungen

Im Folgenden werden Ausführungsbeispiele der Erfindung anhand der Figuren näher erläutert. Dabei zeigt
Figur 1 eine teilweise geschnittene Seitenansicht eines Aufweitwerkzeugs;
Figur 2 ein Aufweitelement des Aufweitwerkzeugs in Schnittdarstellung;
Figur 3 ein Betätigungselement des Aufweitwerkzeugs in teilweiser Schnittdarstellung;
Figur 4 den separat dargestellten vorderen Gehäuseteil des Gehäuses des Aufweitelements in Schnittdarstellung;
Figur 5 den Aufweitkörper separat in Schnittdarstellung;
Figur 6 die Rückwand des Gehäuses des Aufweitelements in Schnittdarstellung;
Figur 7 eine Draufsicht auf die Rückwand des Gehäuses mit radialen Führungen in der Rückwand;
Figur 8 eine Schnittansicht durch die Rückwand und den Aufweitkörper des Ausführungsbeispiels von Figur 7;
Figur 9 eine Frontalansicht von vorne auf einen Aufweitkörper; und
Figur 10 eine Seitenansicht eines Aufweitkörpers mit Hubbegrenzung und mit Fixierungsausformungen; und
Figur 11 eine Frontalansicht nur der Spreizteibolzen mit Fixierungsausformungen.

### Ausführungen der Erfindung

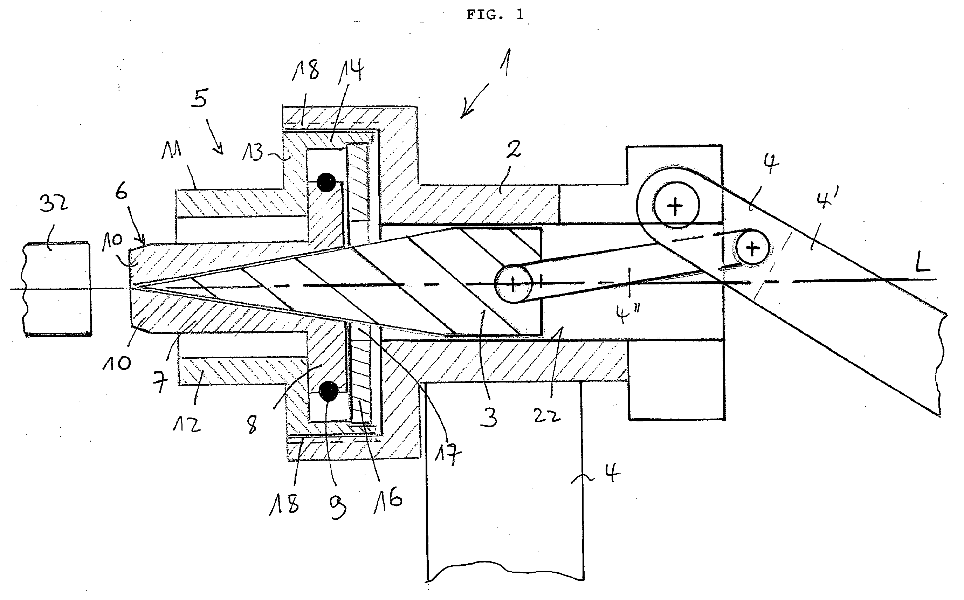

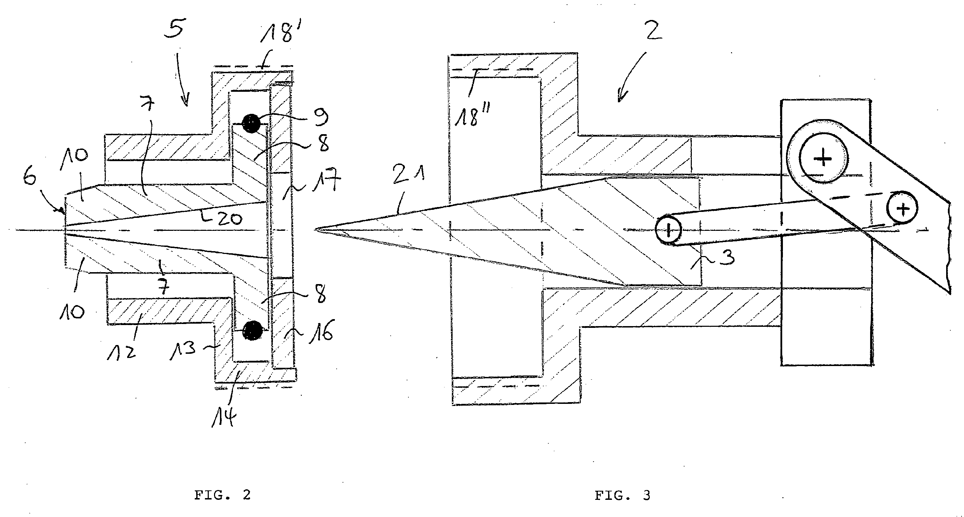

An Hand der Figuren 1 bis 6 wird ein erstes Ausführungsbeispiel des Aufweitwerkzeugs erläutert. Die Figuren 1 und 2 zeigen das Aufweitwerkzeug 1 teilweise geschnitten und mit einer nur zum Teil dargestellten Betätigungsanordnung 4. Abgesehen von der Betätigungsanordnung 4 ist das Aufweitwerkzeug 1 im Wesentlichen rotationssymmetrisch zur Längsachse L aufgebaut. Figur 1 zeigt das Aufweitwerkzeug 1 mit seinem Betätigungselement 2 und dem an diesem lösbar befestigten Aufweitelement 5. Figur 2 zeigt das Betätigungselement 2 und das Aufweitelement 5 in voneinander getrennter Stellung. Aus dieser Stellung von Figur 2 kann erneut die Befestigung des Aufweitelements 5 am Betätigungselement 2 erfolgen.

Zur Befestigung des Aufweitelements 5 am Betätigungselement 2 sind an den Elementen 5 und 2 zusammenwirkende Befestigungselemente vorgesehen, die eine lösbare Befestigung des Aufweitelements 5 am Betätigungselement 2 erlauben, wobei das Aufweitelement 5 in befestigtem Zustand eine in Längsrichtung genau definierte Lage zum Betätigungselement einnimmt. Im gezeigten Beispiel sind die Befestigungselemente 18 von zusammenwirkenden Schraubgewinden gebildet und insbesondere von einem Aussengewinde 18' am Aufweitelement 5 und von einem Innengewinde 18'' in einem Befestigungsraum 2' des Betätigungselements 2. Dies ist die bevorzugte Befestigungsart. Der Fachmann kann aber andere Befestigungen vorsehen, zum Beispiel eine bajonettartige Befestigung des Aufweitelements am Betätigungselement.

Das Betätigungselement 2 umfasst einen Spreizdorn 21, welcher durch die Betätigungsanordnung 4 in Längsrichtung vorschiebbar (d.h. in Richtung auf das Aufweitelement 5 hin bewegbar) und wieder zurückziehbar ist. In den Figuren 1 und 2 ist ein Beispiel für eine manuell bedienbare Betätigungsanordnung 4 angedeutet. Wird der nur teilweise dargestellte Hebel 4' von Hand betätigt, so wird dadurch der Spreizdorn 21 über die Stange 4" in seiner Führung 22 im Betätigungselement vor und zurück verschoben. Wird der Spreizdorn in Längsrichtung nach vorne verschoben, so spreizt er den Aufweitkörper 6 des Aufweitwerkzeugs, der mehrere Spreizkörper 10 aufweist und spreizt damit ein auf dem Spreizkörper angeordnetes Ende eines Rohrs 32 auf. Wird der Spreizdorn in Längsrichtung zurück nach hinten verfahren, so zieht sich der Aufweitkörper 6 wieder zusammen (in der Regel durch Federmittel), so dass das aufgeweitete Rohr vom Aufweitkörper 6 frei gegeben wird. Solches ist grundsätzlich bekannt.

Gemäss der Erfindung ist das Aufweitelement 5 mit einem eigenen Gehäuse versehen, welches durch eine Rückwand geschlossen ist. Dies erlaubt die Führung der Spreizteile 10 des Aufweitkörpers 6 im Aufweitelement 5 mit enger Toleranz. Das Gehäuse 11 des Aufweitelements weist ein vorderes Gehäuseteil auf, welches einen Rohrstutzen 12 ausbildet, an den ein Kragen 13 anschliesst. Damit hat der vordere Gehäuseteil die Form eines Flansches. An den Kragen 13 schliesst ein hohler Gehäuseteil 14 an, der in der Regel hohlzylindrisch ist, und der zusammen mit dem Kragen 13 einen Aufnahmeraum 15 für die Spreizteile 10 des Aufweitkörpers 6 bildet. Die Spreitzteile 10 des Aufweitkörpers 6 weisen in an sich bekannter Weise jeweils Spreizteilzapfen 7 auf, auf die das aufzuweitende Ende des Rohrs 32 aufgeschoben wird, und Spreizteilkragen 8, die der Führung der Spreizteile dienen. Das Gehäuse 11 des Aufweitelements 5 weist ferner eine Rückwand 16 auf. Diese schliesst den Aufnahmeraum 15 ab. Damit ist der Aufnahmeraum 15 vollständig im Aufweitelement 5 selber gebildet und ist nicht vom Betätigungselement 2 abhängig. Dies erlaubt die genaue radiale Führung der Spreizteilkragen 8 durch die vom Kragen 13 und der Rückwand 16 des Gehäuses gebildeten Begrenzungen, so dass die Spreizteilkragen 8 mit ganz geringem Spiel in Axial- bzw. Längsrichtung in dem Aufnahmeraum 15 gehalten werden können. Dies verhindert ein "Kippen" der Spreizteile 10 des Aufweitkörpers, so dass die Spreizteilzapfen 7 sehr gleichmässig an der Innenseite des Rohrs 32 anliegen können. Damit wird auch das Aufweiten sehr empfindlicher Mehrschichtrohre möglich.

In den Figuren 1 und 2 ist der Aufweitkörper 6 ferner mit einem Federmittel 9 dargestellt, welches von einem Gummiring gebildet sein kann. Dies ist bekannt und wird hier nicht weiter erläutert.

Das Aufweitwerkzeug ist im Wesentlichen aus Metall gebildet. Bei einer bevorzugten Ausführung sind indes die Spreizteile 10 des Aufweitkörpers aus Kunststoff gebildet, zum Beispiel aus Acrylnitril-Butadien-Styrol (ABS). Dies ermöglicht eine besonders kostengünstige Herstellung der Spreizteile und damit des Werkzeugs. Durch die enge Führung im Gehäuse können gleichmässigere Belastungen beim Übergang vom Spreizteilkragen zum Spreizteilzapfen erzielt werden, was den Einsatz von Kunststoff ermöglicht.

Ersichtlich ist weiter eine bevorzugte Ausführung, bei welcher die Spreizteilkörper 10 in noch nicht aufgespreizter Ruhelage zusammen einen Innenkonus 20 ausbilden, welcher im Wesentlichen dieselbe Steigung aufweist, wie der Aussenkonus 21 des Spreizdorns 3 des Betätigungselements 2. Ferner ist der Spreizdorn 3 in seiner Länge so gewählt, dass er sich bei aneinander befestigtem Aufweitelement 5 und Betätigungselement 2 des Aufweitwerkzeugs 1 bis zum vorderen Ende des Aufweitkörpers hin erstreckt. Daraus ergibt sich bei der in Figur 1 gezeigten Ruhelage, dass die Spreizteilkörper 10 des Aufweitelements 5 bereits in Ruhelage, bei welcher das Ende des Rohrs 32 auf die Spreizteilzapfen 7 aufgeschoben werden kann, im Wesentlichen mit ihren ganzen Innenkonusflächen auf dem Spreizdorn 3 anliegen. Auch dies verhindert ein Verkanten der Spreizteile des Aufweitkörpers beim Aufspreizen des Rohres und schont damit das Rohr zusätzlich.

Die Rückwand 16 des Gehäuses 11 des Aufweitelements 5 kann unlösbar mit dem vorderen Gehäuseteil verbunden sein. Dies kann zum Beispiel durch Kleben, Löten oder Schweissen erfolgen. In diesem Fall sind die Spreizteilkörper nicht auswechselbar. Die Rückwand 16 des Gehäuses 11 des Aufweitelements kann in einer bevorzugten Ausführungsform lösbar und wieder befestigbar am vordere n Teil des Gehäuses angeordnet sein. Dazu kann am vorderen Gehäuseteil ein Innengewinde und an der Rückwand ein Aussengengewinde vorgesehen sein, womit ein Einschrauben und Ausschrauben der Rückwand ermöglicht wird. Die Durchgangsöffnung 17 in der Rückwand 16, durch welche der Spreizdorn 3 hindurch tritt, kann dann zum Beispiel die Form eines Mehrkants aufweisen, so dass daran ein Werkzeug für die Rotation der Rückwand eingreifen kann. Anstelle einer Verschraubung der Rückwand kann diese am vorderen Gehäuseteil auch magnetisch oder mittels eines Bajonettverschlusses oder mit anderem dem Fachmann bekannten Mitteln lösbar befestigt sein.

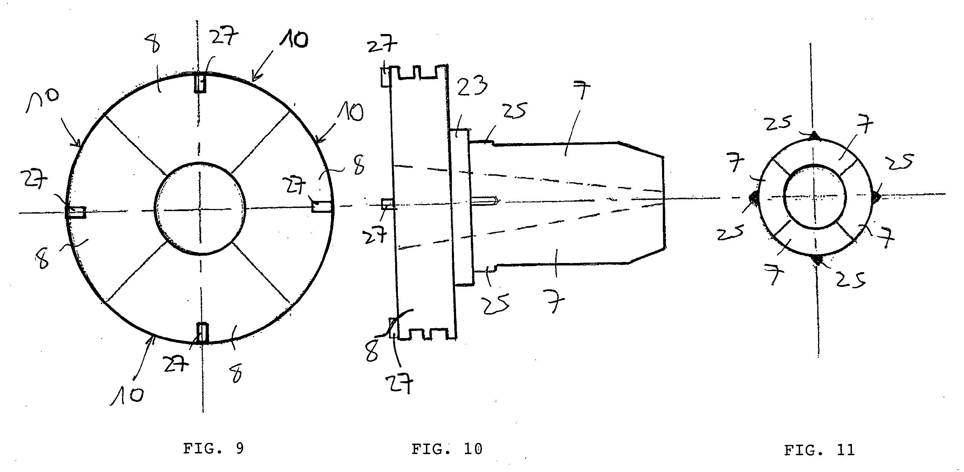

Figur 9 zeigt eine Ansicht von hinten (von der Seite des Betätigungselements 2 her) auf einen Aufweitkörper 6 mit nur vier Spreizteilen 10. Eine geringe Zahl von Spreizteilen, welche 2 oder 3 oder maximal 4 beträgt ist bevorzugt und dient ebenfalls der Schonung des Rohrs beim Aufweiten. Erkennbar sind die Spreizteilkragen 8 und der Innenkonus 20.

Figur 10 zeigt eine Ausführungsform des Aufweitkörpers 6 in Seitenansicht. Es ist ersichtlich, dass zwischen dem jeweiligen Spreizteilzapfen 7 für das Aufspreizen des Rohrs und dem Spreizteilkragen 8 eine Hubbgrenzung 23 vorgesehen ist. Diese ist hier in Form eines umlaufenden Kragens ausgeführt, könnte aber auch aus einzelnen Elementen bestehen, die jeweils vom Spreizteilzapfen radial abragen. Das Ende des Rohrs 32 kann somit nur bis zu der Hubbegrenzung 23 auf die Spreizteilzapfen 7 aufgeschoben werden. Der äussere Umfang der Hubbegrenzung ist radial soweit vom Zentrum der Spreizteile 10 bzw. des Aufweitkörpers entfernt angeordnet, dass dieser äussere Umfang bei der Aufspreizung an der Innenseite des Rohrstutzens 12 des Gehäuses 11 ansteht, wenn das gewünschte Mass der Aufweitung erreicht ist. Für das Rohr 32 bildet dann die Innenseite des Rohrstutzens 12 nur noch eine Anlage zur Glättung des Rohrs und es wird verhindert, dass das Rohr mit zu hoher Presskraft gegen die Innenseite des Rohrstutzens gepresst wird. Dies könnte das Rohr beschädigen, was durch die Hubbegrenzung vermieden wird.

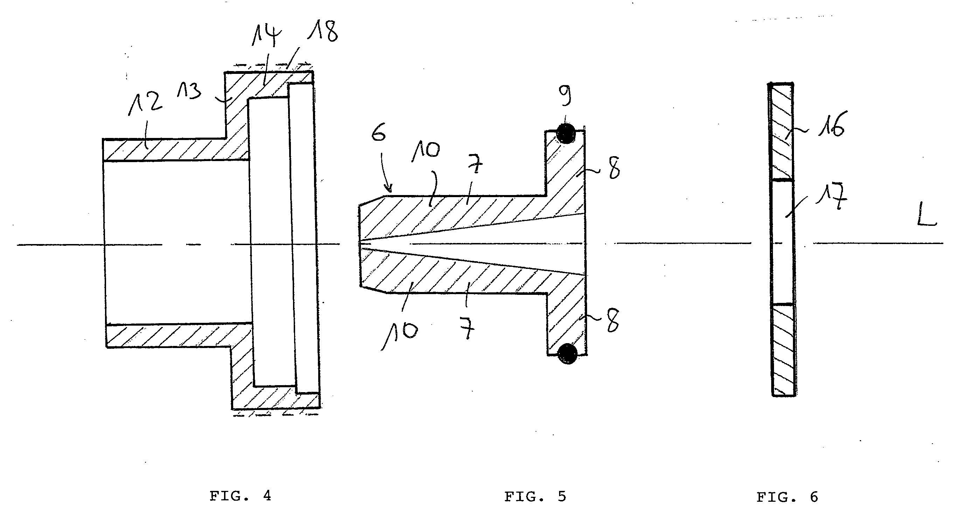

Die Figuren 10 und 11 zeigen eine weitere Ausführung mit einzelnen Fixierungsausformungen 25 in Kombination mit der vorerwähnten Hubbegrenzung. Diese Fixierungsausformungen können aber auch bei einer Ausführung ohne Hubbegrenzung, also bei einem Spreizteilkörper nach Figur 5 vorgesehen sein. Die Fixierungsausformungen 25, die auch in der Art einer Rändelung rundherum angeordnet sein können, fixieren das Ende des Rohrs auf den Spreizteilzapfen. Das Rohr wird also auf diese Fixierungsausformungen 25 aufgeschoben und diese greifen in das Innenmaterial des Rohres ein. Bei der Aufweitung ergibt sich damit, dass das Rohr gleichmässiger den einzelnen Spreizteilzapfen folgt, da es mit diesen über die Fixierungsausformungen "verzahnt" ist. Es hat sich gezeigt, dass damit eine gleichmässigere Aufweitung erfolgt, was das Rohr schont. Die Fixierungsausformungen erstrecken sich in Längsrichtung maximal über 1/10 der Länge der Spreizteilzapfen und grenzen am jeweiligen Spreizteilkragen an oder ggf. an der Hubbegrenzung. Vorzugsweise weist jedes der Spreizteile 10 mindestens eine Fixierungsausformung 25 auf.

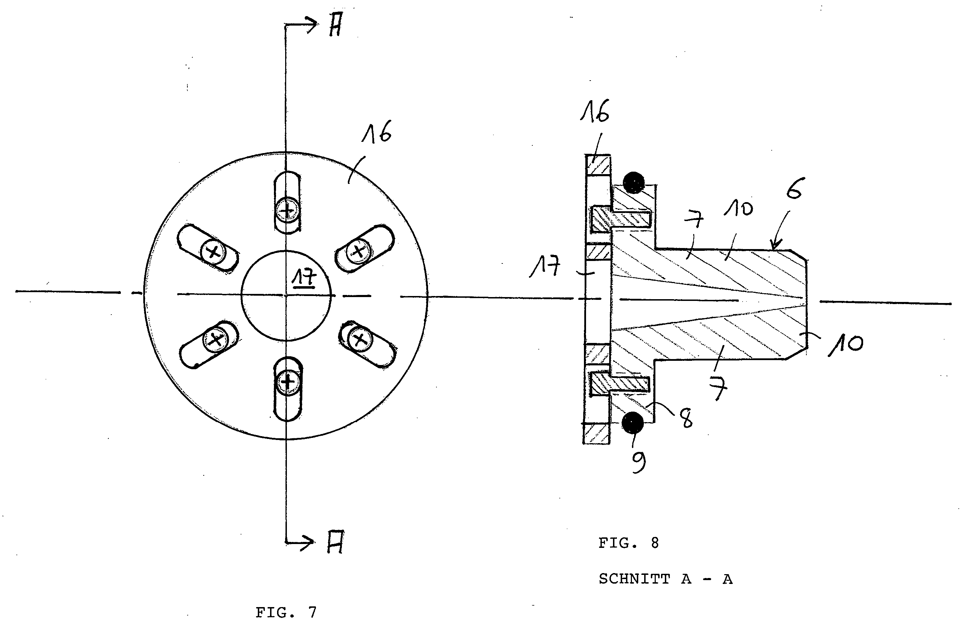

Die Figuren 7 und 8 zeigen eine weitere Ausführungsform, bei welcher die Spreizteile an ihren Spreizkragen 8 mit Führungsmitteln versehen sind, die in Führungen in der Rückwand 16 des Gehäuses 11 eingreifen. Dies kann mechanisch auf verschiedene Weise gelöst werden. In der Figur sind Schrauben 26 in die Kragen 8 eingeschraubt, wobei die Schraubenköpfe in Schlitzen in der Rückwand geführt sind. Auf diese Weise kann eine noch exaktere Führung der Spreizteile 10 im Gehäuse 11 des Aufweitelements 5 erzielt werden. Bei der bevorzugten Ausführung der Spreizteile 10 aus Kunststoff können Führungsmittel 27 direkt am jeweiligen Spreizteil angeformt sein, so dass das Spreizteil 10 mit den Führungsmitteln 27einstückig ist. Auch bei einem Spreizteil aus Kunststoff kann das Führungsmittel aber ebenfalls als separates Teil ausgeführt sein.

Bei einem Aufweitwerkzeug für Rohrenden ist ein Aufweitelement mit einem Aufweitkörper vorgesehen. Das Aufweitelement ist an einem Betätigungselement befestigbar. Das Aufweitelement hat ein eigenes Gehäuse mit einer Rückwand, die zusammen mit dem vorderen Gehäuseteil einen definierten Raum für die Lagerung der Spreizteile des Aufweitkörpers schafft. Damit kann eine sehr genaue Führung der Spreizteile erzielt werden, welche das Aufweitwerkzeug auch für Mehrschichtverbundrohre geeignet macht.

## Patentansprüche

1. Aufweitwerkzeug (1) zum Aufweiten des Endes eines Rohres (32), mit einem Betätigungselement (2), umfassend einen längsverschieblich geführten Spreizdorn (3) und eine Betätigungsanordnung (4) für die Verschiebung des Spreizdorns, und mit einem Aufweitelement (5), umfassend einen durch den Spreizdorn (3) aufweitbaren Aufweitkörper (6), der mehrere kreissegmentartig angeordnete Spreizteile (10) mit jeweils einem Spreizteilzapfen (7) und einem Spreizteilkragen (8) umfasst, **dadurch gekennzeichnet, dass** das Aufweitelement (5) ein Gehäuse (11) aufweist, welches vorderseitig in der Art eines Flansches mit einem die Spreizteile (10) beabstandet umgebenden Rohrstutzen (12) und mit einem Kragen (13) ausgebildet ist, an welchen Kragen sich ein hohlzylindrisches Gehäuseteil (14) anschliesst, der zusammen mit dem Kragen (13) einen Aufnahmeraum (15) für die Spreizteilkragen (8) bildet, welcher Aufnahmeraum (15) durch eine Rückwand (16) des Gehäuses abgeschlossen ist, welche Rückwand eine zentrale Ausnehmung (17) für den Spreizdorn aufweist, und dass das Gehäuse (11) und das Betätigungselement (2) zusammenwirkende Befestigungselemente (18) zur lösbaren Befestigung des Aufweitelements (5) am Betätigungselement (2) aufweist.

2. Aufweitwerkzeug nach Anspruch 1, **dadurch gekennzeichnet, dass** die Spreizteile (10) aus Kunststoff gebildet sind.

3. Aufweitwerkzeug nach Anspruch 1 oder 2, **dadurch gekennzeichnet, dass** die Befestigungselemente (18) von zusammenwirkenden Schraubgewinden (18' und 18'') gebildet sind, welche am Betätigungselement und am Gehäuse des Aufweitelements vorgesehen sind, insbesondere, dass die Befestigungselemente (18) von einem Innengewinde (18") in einer Ausnehmung des Betätigungselements (2) und einem Aussengewinde (18') am Gehäuse (11) des Aufweitelements gebildet sind.

4. Aufweitwerkzeug nach einem der Ansprüche 1 bis 3, **dadurch gekennzeichnet, dass** der Rohrstutzen (12) des Gehäuses einen Innendurchmesser aufweist, welcher der Nenn-Aufweitung des Rohrs durch das Aufweitwerkzeug entspricht.

5. Aufweitwerkzeug nach einem der Ansprüche 1 bis 4, **dadurch gekennzeichnet, dass** die Spreizteile (10) Innenflächen (19) aufweisen, die in der unaufgespreizten Ruhestellung des Aufweitkörpers zusammen einen Innenkonus (20) ausbilden, und dass der Spreizdorn (3) einen Aussenkonus (21) aufweist und dass das Betätigungselement und das Aufweitwerkzeug derart ausgebildet sind, dass bei am Betätigungselement befestigten Aufweitwerkzeug der Innenkonus im Wesentlichen vollflächig am Aussenkonus des Spreizdorns anliegt.

6. Aufweitwerkzeug nach einem der Ansprüche 1 bis 5, **dadurch gekennzeichnet, dass** die Rückwand (16) des Gehäuses und die Spreizteilkragen mit jeweils zusammenwirkenden Radialführungselementen versehen sind.

7. Aufweitwerkzeug nach Anspruch 6, **dadurch gekennzeichnet, dass** an den Spreizteilkragen Ausformungen vorgesehen sind, welche in Ausnehmungen der Rückwand eingreifen.

8. Aufweitwerkzeug nach einem der Ansprüche 1 bis 7, **dadurch gekennzeichnet, dass** der Aufweitkörper zwei oder drei oder maximal vier Spreizteile aufweist, welche in der nicht aufgespreizten Ruhestellung mit den Spreizteilzapfen eine im Wesentlichen kreisförmige Umfangsform des Aufweitkörpers ausbilden.

9. Aufweitwerkzeug nach einem der Ansprüche 1 bis 8, **dadurch gekennzeichnet, dass** die Spreizteile jeweils angrenzend an die Spreizteilkragen eine sich radial ersteckende Hubbegrenzung aufweisen.

10. Aufweitwerkzeug nach einem der Ansprüche 1 bis 9, **dadurch gekennzeichnet, dass** die Spreizteile auf den Spreizteilzapfen jeweils benachbart zu den Spreizteilkragen oder ggf. benachbart zu der Hubbegrenzung Fixierungsausformungen aufweisen, insbesondere, dass jeder der Spreizteilzapfen mindestens eine Fixierungsausformung aufweist.

11. Aufweitwerkzeug nach einem der Ansprüche 1 bis 10, **dadurch gekennzeichnet, dass** die Rückwand (16) des Gehäuses lösbar am vorderen Gehäuseteil befestigt ist, insbesondere, dass die Rückwand durch eine Schraubverbindung, durch eine Bajonettverbindung oder mittels einer magnetisch wirkenden Verbindung lösbar am hohlzylindrischen Gehäuseteil (14) befestigt ist.

12. Aufweitwerkzeug nach einem der Ansprüche 1 bis 11, **dadurch gekennzeichnet, dass** die Betätigungsanordnung (4) eine zur manuellen Verschiebung des Spreizdorns betätigbare Anordnung ist.
